# EUROPÄISCHE PATENTSCHRIFT

(11) **EP 3 682 990 B1**
(45) Veröffentlichungstag und Bekanntmachung des Hinweises auf die Patenterteilung: **11.02.2026**
(21) Anmeldenummer: 19218243.4
(22) Anmeldetag: 19.12.2019
(51) Int. Cl.: B23B 29/20

(54) **SICHERUNGSVORRICHTUNG UND ADAPTER**
SAFETY DEVICE
DISPOSITIF DE SÉCURITÉ

(30) Priorität: 19.01.2019 DE 102019000379
(43) Veröffentlichungstag der Anmeldung: 22.07.2020
(73) Patentinhaber: Kolibri Beteiligung GmbH, 51149 Köln (DE)
(72) Erfinder: Giesler, Steffen, 72458 Albstadt (DE); Ewald, Marius, 72793 Pfullingen (DE)
(74) Vertreter: Bartels und Partner, Patentanwälte

(56) Entgegenhaltungen:
- WO-A1-89/03266
- WO-A2-2018/033235
- DE-A1- 102015 012 938
- GB-A- 2 101 028

## Beschreibung

Die Erfindung betrifft einen Adapter für einen Werkzeughalter und eine Werkzeugaufnahme mit den Merkmalen im Oberbegriff von Anspruch 1.

Fachsprachlich als Werkzeugrevolver bezeichnete, schwenkbare Werkzeugscheiben, die außenumfangsseitig eine Vielzahl von Aufnahmen für Bearbeitungswerkzeuge aufnehmen, sind in unterschiedlichen Ausgestaltungen Stand der Technik. Wie beispielhaft die Dokumente DE 10 2005 033 890 A1 oder DE 10 2014 003 336 A1 zeigen, weisen solche Werkzeugrevolver üblicherweise einen mit der betreffenden Werkzeugmaschine verbindbaren Grundkörper auf, an dem die Werkzeugscheibe um eine Revolverachse drehbar gelagert ist, wobei die Werkzeugscheibe Arbeitsstationen aufweist, die mit Werkzeughaltern für Bearbeitungswerkzeuge bestückbar sind und wobei ausgewählte Arbeitsstationen durch Drehen der Werkzeugscheibe in eine Arbeitsposition schwenkbar sind. Bei den Bearbeitungswerkzeugen, die zum Einsatz kommen sollen, handelt es sich hauptsächlich um Werkzeuge zur spanabhebenden Bearbeitung, wie rotatorisch angetriebene Bohr- oder Fräswerkzeuge oder um statische Werkzeuge, wie Drehmeißel. Zur Anpassung an jeweilige unterschiedliche Bearbeitungsaufgaben sind Wechselvorgänge durchzuführen, bei denen ein an einer betreffenden Arbeitsposition befindliches Bearbeitungswerkzeug ausgewechselt und durch ein Bearbeitungswerkzeug anderer Art ersetzt wird. Bei bestimmten Fertigungsaufgaben, wie bei Werkstücken für die Fertigung von Kleinserien, ist ein häufiger Wechsel unterschiedlicher zum Einsatz kommender Bearbeitungswerkzeuge erforderlich, was zu einem erheblichen Arbeitsanteil für das Bedienpersonal führt. Um die dadurch bedingten hohen Bearbeitungskosten zu senken, geht die Bestrebung dahin, den Vorgang des Werkzeugwechsels maschinell zu unterstützen. Ein diesbezüglicher, nachveröffentlichter Stand der Technik ist in der Patentanmeldung DE 10 2018 004 677.0 offenbart. Bei dem dort gezeigten Werkzeugrevolver sind die Festlegeeinrichtungen, wie sie bei derartigen Werkzeugrevolvern üblicherweise zur Fixierung und Freigabe der Werkzeughalter an den oder von den Werkzeugaufnahmen vorgesehen sind, maschinengesteuert betätigbar. Die systemgesteuerte Freigabe eines auszuwechselnden Werkzeugs und das Festlegen eines eingewechselten Werkzeugs ermöglichen die Durchführung des Wechselvorgangs in voll automatischem Betrieb mittels eines Handhabungsroboters, der den freigegebenen Werkzeughalter abnimmt und einen anderen Werkzeughalter einsetzt. Bei voll automatisch durchgeführtem Werkzeugwechsel ist somit auch ein zumindest teilautomatisierter Betrieb der betreffenden Bearbeitungs-Gesamtanlage realisierbar, was eine Verringerung der Rüstkosten ermöglicht und zu einer entsprechenden Reduzierung von Arbeitszeit und Arbeitskosten führt.

Bei den Wechselvorgängen ergeben sich dann Probleme, wenn die Position, an der sich ein von der Festlegeeinrichtung für den Auswechselvorgang freigegebener Werkzeughalter befindet, für den Roboterarm des Handhabungssystems schlecht oder nicht zugänglich ist. Beispielsweise kann dies an der Arbeitsposition der Fall sein, bei der sich das betreffende Bearbeitungswerkzeug des Werkzeughalters im Bereich eines zu bearbeitenden Werkstücks befindet. Um einen von Werkstückhalterungen oder dergleichen ungestörten Zugriff für das Handlingsystem zu ermöglichen, muss die Werkzeugscheibe in eine hierfür geeignete Position gedreht werden, wobei bei inaktivierter Festlegeeinrichtung die Gefahr des Herausfallens des Werkzeughalters aus der Werkzeugaufnahme besteht.

Die WO 2018/033235 A2 beschreibt einen Adapter für einen Werkzeughalter und eine Werkzeugaufnahme, mit den Merkmalen im Oberbegriff von Anspruch 1 aufweisend einen plattenförmigen Grundkörper und eine Sicherungsvorrichtung zum Sicherstellen der Position des Adapters an der Werkzeugaufnahme einer schwenkbaren Werkzeugscheibe einer Werkzeugmaschine, wobei die Sicherungsvorrichtung eine Betätigungseinrichtung, mindestens ein Verriegelungsteil zur sichernden Anlage mit einem Sicherungsteil der Werkzeugaufnahme und einen Energiespeicher aufweist, wobei das mindestens eine Verriegelungsteil in dem plattenförmigen Grundkörper längsverfahrbar geführt und mittels der Betätigungseinrichtung zwischen einer verriegelten Stellung und einer Freigabestellung sowie umgekehrt bewegbar ist.

Weitere Adapter gehen aus der WO 89/03266 A1, der DE 10 2015 012 938 A1 und der GB 2 101 028 A hervor.

Im Hinblick auf diese Problematik stellt sich die Erfindung die Aufgabe, für den Adapter, in Form des Grundkörpers eines Werkzeughalters oder in Form einer Abdeckplatte für die Werkzeugaufnahme einer Werkzeugscheibe, eine Sicherungsvorrichtung zur Verfügung zu stellen, die das betriebssichere Überführen eines Adapters in eine und aus einer Wechselposition bei inaktivierter Festlegeeinrichtung ermöglicht.

Erfindungsgemäß ist diese Aufgabe durch einen Adapter gelöst, die die Merkmale des Patentanspruchs 1 in seiner Gesamtheit aufweist.

Gemäß dem kennzeichnenden Teil des Patentanspruchs 1 besteht eine wesentliche Besonderheit der Erfindung darin, dass die Betätigungseinrichtung als ein Betätigungsstift ausgebildet und einstückiger Bestandteil des Verriegelungsteils ist, dass das Verriegelungsteil mittels eines Energiespeichers in seiner verriegelten Position gehalten ist, und dass der Verriegelungsbolzen eine Ausnehmung aufweist, durch die in der Freigabestellung ein Rastbolzen als Sicherungsteil hindurchgreift, der eine Rastausnehmung aufweist, in die der jeweilige Verriegelungsbolzen in der verriegelnden Stellung eingreift.

Es ist ferner vorgesehen, dass mittels der Betätigungseinrichtung mindestens ein Verriegelungsteil aus der verriegelten Stellung heraus, bei der das Verriegelungsteil in sichernder Anlage mit dem Sicherungsteil als Teil der Werkzeugaufnahme ist, in die Freigabestellung bringbar ist, bei der unter Freigabe des Sicherungsteils der Adapter von der Werkzeugaufnahme abnehmbar ist. Dadurch, dass dergestalt der Adapter durch den sichernden Eingriff des Verriegelungsteils mit dem Sicherungsteil an der Werkzeugaufnahme unabhängig vom aktivierten oder inaktivierten Zustand der Festlegeeinrichtung in seiner Position fixiert ist, ist das gefahrlose Überführen zwischen Arbeitspositionen und Wechselpositionen sichergestellt. Da das jeweilige Verriegelungsteil mittels der Betätigungseinrichtung in eine Freigabestellung bringbar ist, ist gleichzeitig die Abnahme des auszuwechselnden Adapters in der gewünschten Wechselposition ermöglicht.

Das jeweilige Verriegelungsteil ist der Verriegelungsbolzen, der die Ausnehmung aufweist, durch die in der Freigabestellung der Rastbolzen als Sicherungsteil hindurchgreift, der die Rastausnehmung aufweist, in die der jeweilige Verriegelungsbolzen in der verriegelnden Stellung eingreift. In der Form als Verriegelungsbolzen ist das Verriegelungsteil durch eine Verschiebebewegung in die Freigabestellung bringbar, was eine einfache Bauweise der Betätigungseinrichtung ermöglicht.

Die Anordnung ist so getroffen, dass das jeweilige Verriegelungsteil respektive der jeweilige Verriegelungsbolzen entgegen der Wirkung des Energiespeichers mittels der Betätigungseinrichtung von seiner verriegelnden Stellung in seine Freigabestellung gelangt. Dadurch ist die Vorrichtung selbstsichernd, weil bei nicht angesteuerter Betätigungseinrichtung Verriegelungsteil respektive Verriegelungsbolzen durch die Wirkung des Energiespeichers in die verriegelnde Stellung zurückstellbar sind. Dadurch ist sichergestellt, dass der Adapter normalerweise an der Werkzeugscheibe gesichert und lediglich bei Ansteuerung der Betätigungseinrichtung, beispielsweise mittels des Greifers des Roboterarms beim Auswechselvorgang, von der Werkzeugaufnahme abnehmbar ist.

Bei vorteilhaften Ausführungsbeispielen nimmt bei aufgesetztem Adapter auf der Werkzeugaufnahme ein Paar von Verriegelungsbolzen, in einer Ebene im Adapter aufgenommen, einander gegenüberliegend zwischen sich den Rastbolzen auf. Bei dieser Anordnung ist eine große Haltekraft in der verriegelnden Stellung bei gleichzeitig geringen erforderlichen Verschiebekräften der Verriegelungsbolzen realisierbar.

Mit Vorteil können die Ausnehmung des jeweiligen Verriegelungsbolzens und die Rastausnehmung des Rastbolzens aus jeweils umlaufenden Ringnuten gebildet sein, die, ausgehend von ihrem Nutgrund, mit Steuerflächen, insbesondere in Form von Steuerschrägen, versehen sind. Aufgrund der Steuerflächen erfolgt das Ein- und Ausrasten mit geringen Verschiebekräften der Verriegelungsbolzen, so dass zum einen für den Freigabevorgang geringe Betätigungskräfte und zum anderen zum Rückstellen in den Sicherungszustand geringe Rückstellkräfte durch den Energiespeicher aufzubringen sind.

Bei bevorzugten Ausführungsbeispielen verlaufen die beiden entgegengesetzten Verfahrrichtungen des jeweiligen Verriegelungsbolzens quer zur Aufsetzrichtung des Adapters auf die Werkzeugaufnahme. Diese Verfahrrichtung vereinfacht die Betätigung, die beispielsweise von der Vorderseite der Werkzeugscheibe her erfolgen kann.

Mit Vorteil kann die Anordnung so getroffen sein, dass der Rastbolzen quer zur Aufnahmefläche der Werkzeugaufnahme und über diese vorstehend stationär an der Werkzeugaufnahme angeordnet ist. Bei dieser Anordnung kommt der Rastbolzen als aus der Aufnahmefläche vorstehendes Bauteil beim Einsetzen des jeweiligen Werkzeughalters in die in den Adapter eingreifende Wirkposition für die Zusammenwirkung mit dem Verriegelungsbolzen.

Mit besonderem Vorteil kann die Betätigungseinrichtung einen aus dem Adapter hervorragenden Betätigungsstift aufweisen, der den jeweils zuordenbaren Verriegelungsbolzen entgegen der Wirkung des Energiespeichers in Form einer Druckfeder betätigt. Der Überstand des jeweiligen Betätigungsstifts ermöglicht eine einfache Betätigung zum Überführen in die Freigabestellung mittels eines betreffenden Greifers des Handlingsystems, der lediglich den Betätigungsstift anzufahren und gegen die Wirkung der Druckfeder zu verschieben braucht. Bei Freigabe durch den Greifer erfolgt die Rückstellung in den verriegelnden Zustand selbsttätig durch die Druckfeder.

Mit Vorteil ist der jeweilige Betätigungsstift in einer Führungseinrichtung längsverfahrbar geführt, die stirnseitig an dem Adapter angeordnet ist, wobei vorzugsweise jeder Adapter, der an der Werkzeugscheibe festzulegen ist, eine solche Führungseinrichtung aufweist.

Bei besonders bevorzugten Ausführungsbeispielen ist die Führungseinrichtung als Handhabe für ein Handhabungssystem, vorzugsweise in der Art eines Prismas, ausgebildet, das mit seinem einen Eckbereich in festgelegtem Zustand des Adapters an der Werkzeugscheibe mit einem vorgebbaren Überstand über diese vorsteht. Der prismatische, vorstehende Formkörper bietet zum einen eine sichere Handhabe für den Greifer und gewährleistet zum anderen die sichere Führung des jeweiligen Betätigungsstifts bei der Überführung in die Freigabestellung durch den den Betätigungsstift verschiebenden Greifer, so dass ein sicherer, voll automatischer Wechselvorgang realisierbar ist.

Nachstehend ist die Erfindung anhand eines in der Zeichnung dargestellten Ausführungsbeispiels im Einzelnen erläutert. Es zeigen:
- Fig. 1: eine perspektivische Schrägansicht eines mit einem Ausführungsbeispiel der erfindungsgemäßen Sicherungsvorrichtung versehenen Werkzeugrevolvers, gesehen auf die Werkzeugscheibe;
- Fig. 2: eine perspektivische Schrägansicht eines Umfangsabschnitts der Werkzeugscheibe und eines Werkzeughalters, versehen mit dem Ausführungsbeispiel der Sicherungsvorrichtung, wobei der Werkzeughalter vor dem Aufsetzen auf die Werkzeugscheibe gezeigt ist;
- Fig. 3: eine der Fig. 2 entsprechende Darstellung, wobei der Werkzeughalter auf die Werkzeugscheibe aufgesetzt gezeigt ist;
- Fig. 4: eine vergrößert gezeichnete perspektivische Schrägansicht des Rastbolzens und der Verriegelungsbolzen des Ausführungsbeispiels der Sicherungsvorrichtung, wobei die Verriegelungsbolzen in der freigebenden Stellung gezeigt sind;
- Fig. 5: eine der Fig. 4 entsprechende Darstellung, wobei die Verriegelungsbolzen in der verriegelnden Stellung gezeigt sind;
- Fig. 6: einen Horizontalschnitt des Adapters des in Fig. 1 und 2 gezeigten Werkzeughalters; und
- Fig. 7: einen in einer Radialebene der Werkzeugscheibe verlaufenden Teilschnitt eines Umfangsabschnitts der Werkzeugscheibe mit in der gezeigten Werkzeugaufnahme eingesetztem und mittels der Festlegeeinrichtung fixiertem Werkzeughalter.

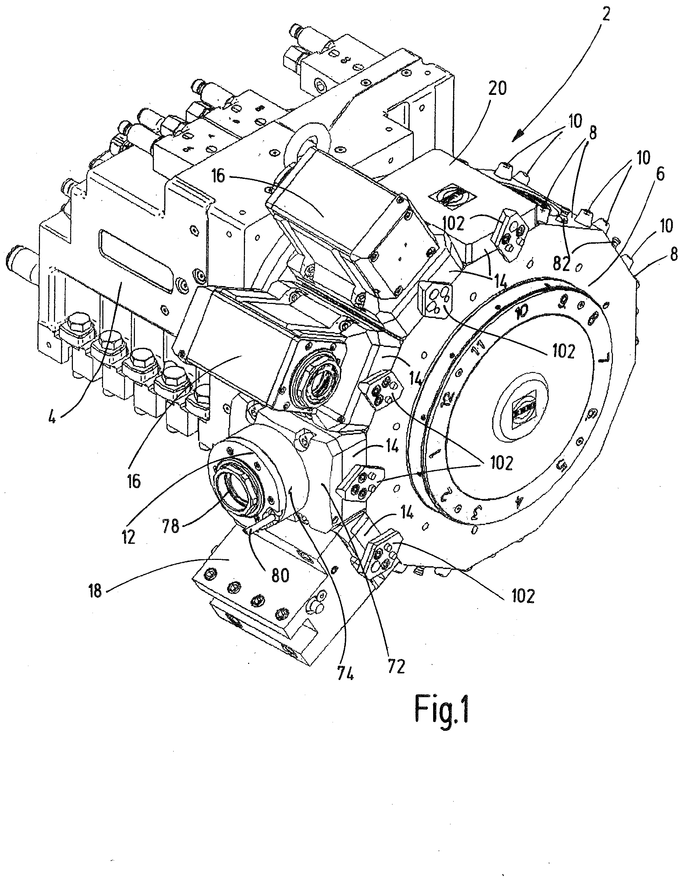

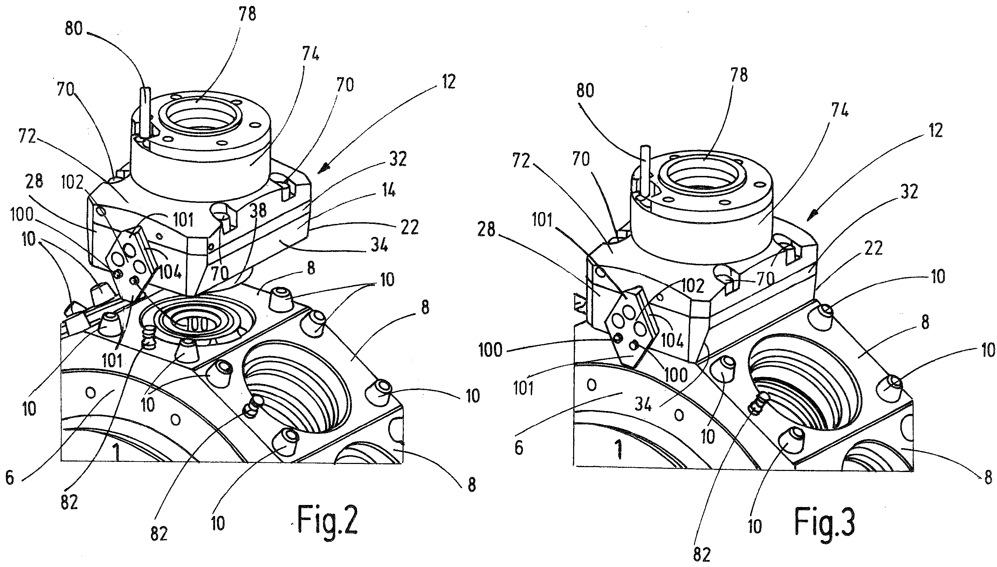

Der in Fig. 1 dargestellte Werkzeugrevolver 2 weist an einem Grundkörper 4 eine um eine Revolverachse schwenkbar gelagerte Werkzeugscheibe 6 auf, die in der bei derartigen Revolvern üblichen Weise an ihrem Außenumfang Arbeitsstationen, bei dem in der Figur gezeigten Beispiel 12 Arbeitsstationen aufweist. Für die Festlegung von Werkzeughaltern ist an jeder Arbeitsstation eine Aufnahmefläche 8 (in Fig. 1nur teilweise beziffert) ausgebildet, an denen in mittels Positionierstiften 10 ausgerichteter Lage Werkzeughalter mit einem zugehörigen Adapter 14 festlegbar sind. Bei der Darstellung von Fig. 1 ist lediglich ein Teil der Arbeitspositionen mit Werkzeughaltern bestückt. Außer dem in Fig. 2 und 3 gezeigten Werkzeughalter 12, der für ein angetriebenes Werkzeug mit gerader Antriebsachse ausgelegt ist, sind in Fig. 1 zwei weitere Werkzeughalter 16 für angetriebene Werkzeuge mit Winkeltrieb, ein Werkzeughalter 18 für ein statisches Werkzeug, wie einen Drehmeißel, sowie eine Abdeckung 20 gezeigt, die durch einen Adapter 14 ohne seinen zugehörigen Werkzeughalterteil gebildet ist.

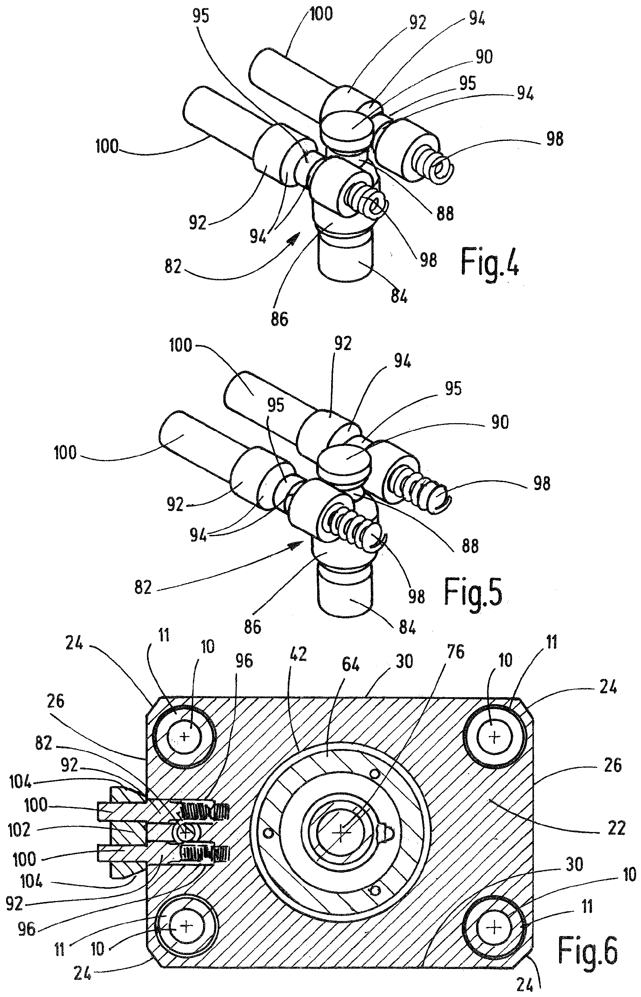

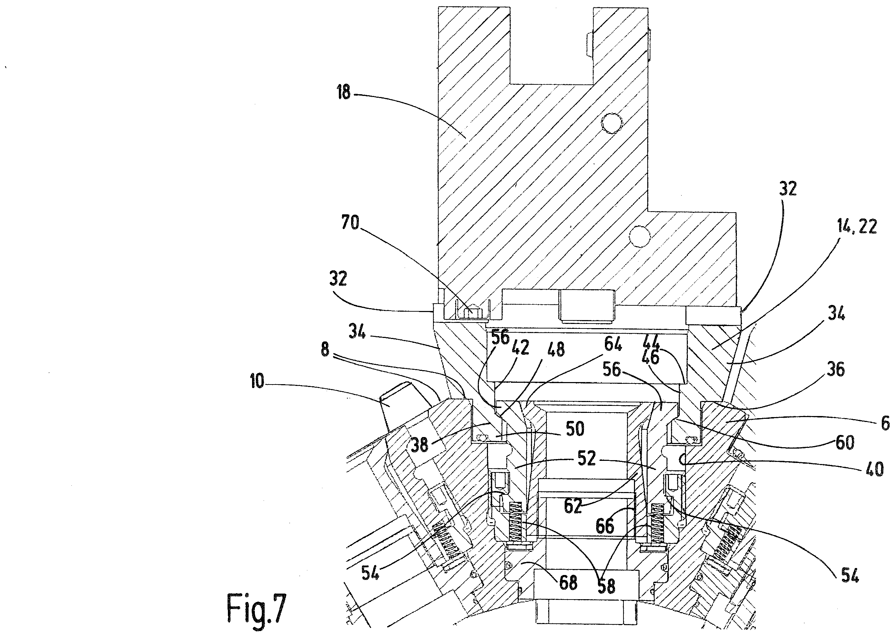

Wie die Fig. 2 und 3 in Verbindung mit Fig. 6 und 7 zeigen, weisen die Adapter 14 jeweils einen Grundkörper 22, s. Fig. 6 und 7, auf, der einen im Wesentlichen rechteckförmigen Umriss mit abgeschrägten Eckbereichen 24 (Fig. 6) besitzt. Die entlang der Schmalseiten 26 verlaufenden Seitenflächen des Grundkörpers 22 sind ebenflächig. Von diesen bildet bei an der Werkzeugscheibe 6 angebrachtem Adapter 14 die in Fig. 2 und 3 vorn liegende und in Fig. 6 linksseitig gelegene Fläche die mit 28 bezeichnete Stirnseite, die die von vorne zugängliche Betätigungsseite der Sicherungsvorrichtung bildet. Entlang seiner Langseiten 30 weisen die Seitenwände des Grundkörpers 22, anschließend an einen zur Hauptebene des Grundkörpers 22 senkrechten oberen Leistenteil 32 (Fig. 2 und 3), einen dazu schräg verlaufenden Wandteil 34 auf, der die Breite des Grundkörpers 22 nach unten verjüngt, bis zum Übergang zur ebenflächigen Anlagefläche 36, mit der der Grundkörper 22 bei der Funktionsposition an der Aufnahmefläche 8 der Werkzeugscheibe 6 anliegt, s. Fig. 7. Im Zentralbereich steht aus der Anlagefläche 36 ein Anschlussteil 38 in Form eines Ringkörpers vor, der sich bei der in Fig. 7 gezeigten Funktionsposition in die Werkzeugaufnahme 40 der Werkzeugscheibe 6 erstreckt. Der Anschlussteil 38 umgibt in der Grundplatte 22 eine Durchtrittsöffnung 42, die im Innendurchmesser gestuft ist, siehe Fig. 7, wobei der Innendurchmesser der Durchtrittsöffnung 42 an einer ersten Stufe 44 in einen im Innendurchmesser verjüngten zylindrischen Abschnitt übergeht, an den sich in einer geneigt verlaufenden zweiten Stufe 48 ein das Ende des Anschlussteils 38 bildendes, radial nach innen vorspringendes Hakenteil 50 anschließt. Dieses wirkt als Halteteil mit einer steuerbaren Festlegeeinrichtung zusammen, mittels deren der Grundkörper 32 des Adapters 14 an der betreffenden Aufnahmefläche 8 der Werkzeugscheibe 6 bei aktivierter Festlegeeinrichtung spannbar ist. In der Nähe der Eckbereiche 24 sind im Grundkörper 22 Ausnehmungen 11 für den Eingriff der Positionierstifte 10 vorgesehen.

Die Festlegeeinrichtung ist durch einen Klinkentrieb gebildet, der, wie es in der den nachveröffentlichten Stand der Technik offenbarenden Patentanmeldung DE 10 2018 004 677.0 gezeigt ist, siehe insbesondere deren Fig. 4a und 4b, paarweise einander gegenüberliegende Rastklinken aufweist, die in Fig. 7 mit 52 bezeichnet sind. Diese sind jeweils um eine Schwenkstelle 54 schwenkbar, weisen am oberen Ende ein radial nach außen vorstehendes Sperrteil 56 auf und sind durch jeweils eine am unteren Ende der Rastklinken 52 angreifende Feder 58 leicht für eine Schwenkbewegung vorgespannt. In der in Fig. 7 gezeigten, nach außen geschwenkten Festlegeposition sind die Sperrteile 56 mit einer schrägen Haltefläche 60 in Halteeingriff der schrägen zweiten Stufe 58 am Hakenteil 50 des Anschlussteils 38, so dass die Grundplatte 22 an der Aufnahmefläche 8 der Werkzeugscheibe 6 festgelegt ist. Bei dem in Fig. 7 gezeigten, aktivierten Zustand der Festlegeeinrichtung sind die Rastklinken 52 in diesem Eingriff mittels einer Steuerhülse 62 gehalten, die bei der in Fig. 7 gezeigten Axialposition mit einem im Außendurchmesser erweiterten oberen Endrand 64 die Rastklinken 52 im Halteeingriff mit der schrägen zweiten Stufe 58 am Hakenteil 50 hält. An dem Endrand 64 entgegengesetztem Ende weist die Steuerhülse 62 ein Innengewinde 66 auf, das mit dem Außengewinde eines drehbaren Betätigungsteils 68 in Gewindeeingriff ist. Wie in der genannten, den nachveröffentlichten Stand der Technik offenbarenden Patentanmeldung gezeigt ist, ist zur Betätigung der Festlegeeinrichtung das Betätigungsteil 68 über einen Mitnehmer (nicht gezeigt) mit der Antriebswelle des Werkzeugantriebs der Werkzeugscheibe 6 gekuppelt. Zum Deaktivieren der Festlegeeinrichtung wird durch den Werkzeugantrieb das Betätigungsteil 68 so gedreht, dass sich durch den Gewindeeingriff die Steuerhülse 62 nach oben bewegt und deren verbreiterter Endrand 64 dadurch außer Anlage mit dem Sperrteil 56 der Rastklinken 52 gelangt und die Rastklinken 52 mit ihrem Sperrteil 56 nicht länger an der Haltefläche 60 am Hakenteil 50 gehalten sind. Da der Halteeingriff an der Stufe 58 des Hakenteils 50 und der Haltefläche 60 der Rastklinken 52 jeweils an einer Schrägfläche erfolgt, bilden diese Flächen Steuerflächen, die beim Abheben eine Schwenkbewegung der Rastklinken 52 nach innen in den hinter den verbreiterten Endrand 64 gebildeten Freiraum und damit die Freigabe des Werkzeughalters 18 ermöglichen.

Bei der Darstellung von Fig. 7 ist der Adapter 14 Bestandteil des statischen Werkzeughalters 18, der für ein nicht angetriebenes Werkzeug, wie einen Drehmeißel, vorgesehen ist. Der Werkzeughalter 18 ist mittels Befestigungsschrauben 70 mit dem Grundkörper 22 des Adapters 14 verschraubt. Die Fig. 2 und 3 zeigen demgegenüber die Kombination des Adapters 14 mit dem Werkzeughalter 12 für ein mit geradem Spindeltrieb anzutreibendes Rotationswerkzeug. Der Werkzeughalter 12 weist ein Fußteil 72 mit einem Umriss, der dem Umriss des Grundkörpers 22 entspricht und mit an seiner Unterseite befindlicher ebener Anlagefläche auf und ist mittels der Schrauben 70 am Grundkörper 22 befestigt. Von der leicht konvex gewölbten Oberseite des Fußteils 72 erstreckt sich in zentral gelegener Anordnung ein kreiszylinderförmiger Tubus 74 nach oben, in dem sich, wie bei derartigen Werkzeughaltern für rotatorisch angetriebene Werkzeuge üblich, die Lagerung einer Antriebsspindel 76 befindet, die sich, s. Fig. 6, durch die Durchtrittsöffnung 42 des Grundkörpers 22 hindurch erstreckt und die mit dem Werkzeugantrieb der Werkzeugscheibe 6 kuppelbar ist. Das jeweils einzusetzende Werkzeug ist über die an der freien Oberseite des Tubus 74 befindliche Öffnung 78 in die an der Spindelwelle befindliche Halterung einsetzbar. Für die Übergabe von Kühlschmiermittel von der Werkzeugscheibe 6 an ein an der Oberseite des Tubus 74 befindliches Abgaberohr 80 sind im Fußteil 72 und im Grundkörper 22 nicht gezeigte Fluidkanäle ausgebildet.

Die Sicherungsvorrichtung, die im Betätigungszustand unabhängig davon, ob die Festlegeeinrichtung aktiviert oder im Freigabezustand ist, den jeweiligen Adapter 14 an der Werkzeugscheibe 6 sichert, weist seitens der Werkzeugscheibe 6 an der Aufnahmefläche 8 jeder Arbeitsstation einen Rastbolzen 82 auf. Diese sind, wie am deutlichsten den Fig. 2 und 3 entnehmbar ist, auf der gedachten Verbindungslinie zwischen den an der freien Stirnseite der Werkzeugscheibe 6 befindlichen Positionierstiften 10 in der Mitte angeordnet und stehen aus der Ebene der Aufnahmefläche 8 senkrecht mit einer die Positionierstifte 10 geringfügig übersteigenden Höhe vor. Die das revolverseitige Sicherungsteil bildenden Rastbolzen 82 weisen, wie Fig. 4 und 5 zeigen, an ihrem fußseitigen Endabschnitt ein Außengewinde 84 auf, mit dem sie mit der Aufnahmefläche 8 verschraubt sind. Anschließend an den Gewindeabschnitt weisen sie einen im Durchmesser vergrößerten Bund 86 auf, an den sich eine Ringnut 88 anschließt, die wiederum den Übergang zu einem Kopfteil 90 bildet, dessen Durchmesser geringer ist als der Durchmesser des Bundes 86. Die Ringnut 88 erweitert sich vom Nutgrund ausgehend mit Schrägflächen nach außen. Als mit dem jeweiligen Rastbolzen 82 zusammenwirkende, dem Adapter 14 zugehörige Verriegelungsteile sind zwei gleich ausgebildete Verriegelungsbolzen 92 vorgesehen, die jeder auf der Hälfte seiner Länge eine Ausnehmung aufweisen, die, wie die Rastausnehmung des Rastbolzens 82, ebenfalls durch eine Ringnut 94 gebildet ist, die, wie dessen Ringnut 88 vom ebenen Nutgrund ausgehend, nach außen hin durch Schrägflächen 94 erweitert ist. Wie die Fig. 6 zeigt, sind die Verriegelungsbolzen 92 im Grundkörper 22 in Bohrungen 96 längsverfahrbar geführt, die, von der die Stirnseite 28 bildenden Schmalseite 26 im Grundkörper 22 ausgehend, in gleicher Ebene neben der für den Durchtritt des Rastbolzens 82 gebildeten Bohrung entlang der Langseiten 30 verlaufen. Durch eine im Grund der Bohrung 96 sitzende Druckfeder 98 sind die Verriegelungsbolzen 92 für eine Verschiebebewegung nach außen hin, d.h. in Richtung auf die Schmalseite 26, vorgespannt. An die den Druckfedern 98 entgegengesetzten Enden der Verriegelungsbolzen 92 schließt sich als Verlängerung jeweils ein Betätigungsstift 100 an, die mit einem Überstand über die Stirnseite 28 nach außen vorstehen. In dem vorstehenden Bereich sind die Betätigungsstifte 100 in Führungsbohrungen einer Führungseinrichtung verschiebbar geführt, die durch einen Formkörper 102 gebildet ist. Dieser besitzt, wie am deutlichsten die Fig. 2 und 3 zeigen, die Form eines in der Art eines Prismas geformten Blocks, der an der Stirnseite 28 des Adapters 14 angeschraubt ist. Dabei stehen in der Breite verjüngte Eckbereiche 101 des Formkörpers 102 nach oben und unten über den Grundkörper 22 vor. Im an der Werkzeugscheibe 6 festgelegten Zustand übergreift der untere Eckbereich 101 daher den stirnseitigen Rand der Werkzeugscheibe 6, siehe Fig. 1 und 2.

Die Fig. 4 und 5 verdeutlichen die Freigabestellung bzw. die sichernde Verriegelungsstellung der Verriegelungsbolzen 92. Bei der sichernden Stellung, die auch in Fig. 6 gezeigt ist, stehen die Betätigungsstifte 100 über den prismatischen Formkörper 102 vor. Bei dieser Position, s. Fig. 5, sind die Verriegelungsbolzen 92 mit ihrem zwischen Ringnut 95 und Druckfeder 98 verlaufenden Abschnitt in Rasteingriff mit der die Rastausnehmung bildenden Ringnut 88 des Rastbolzens, so dass der sichernde Eingriff gebildet ist, der das Abheben des Adapters 14 vom Rastbolzen 82 verhindert. Werden die vorstehenden Betätigungsstifte 100 gegen die Wirkung der Druckfedern 98 eingedrückt, dann kommt das Kopfteil 90 des Rastbolzens 82, wie in Fig. 4 gezeigt, in den Bereich der Ringnuten 95 der Verriegelungsbolzen 92, so dass für das Kopfteil 90 ein Freiraum zur Verfügung steht, der das Abheben des Adapters 14 nach oben ermöglicht. Mit ihrer prismatischen Form mit hintergreifbaren schrägen Seitenflächen 104 bildet der Formkörper 102 eine sichere Handhabe für einen Greifer eines einen Werkzeugwechsel durchführenden Roboterarms. Bei der vorstehenden Anordnung der Betätigungsstifte 100 ist bei Anfahren des Greifers an den Formkörper 102 gleichzeitig die Sicherungsvorrichtung durch bündiges Einschieben der Betätigungsstifte 100 in die Freigabestellung überführbar. Da vor dem Anfahren des Greifers an den Formkörper 102 die Sicherungsvorrichtung durch die Druckfedern 98 in sicherndem Verriegelungszustand gehalten ist, kann ein auszuwechselnder Werkzeughalter 12, 16, 18 oder eine Abdeckung 20, nachdem in der betreffenden Arbeitsstation die Festlegeeinrichtung deaktiviert ist, für den Wechselvorgang in eine für den Roboterzugriff geeignete Wechselposition ohne die Gefahr des Abfallens des Adapters 14 von der Werkzeugscheibe 6 überführt werden.

## Patentansprüche

1. Adapter (14) für einen Werkzeughalter (12, 16, 18) und eine Werkzeugaufnahme (8), aufweisend einen plattenförmigen Grundkörper (22) und eine Sicherungsvorrichtung zum Sicherstellen der Position des Adapters (14) an der Werkzeugaufnahme (8) einer schwenkbaren Werkzeugscheibe (6) einer Werkzeugmaschine, wobei die Sicherungsvorrichtung eine Betätigungseinrichtung (100), mindestens ein Verriegelungsteil (92) zur sichernden Anlage mit einem Sicherungsteil (82) der Werkzeugaufnahme (8) und einen Energiespeicher (98) aufweist, wobei das mindestens eine Verriegelungsteil (92) in dem plattenförmigen Grundkörper (22) längsverfahrbar geführt und mittels der Betätigungseinrichtung (100) zwischen einer verriegelten Stellung und einer Freigabestellung sowie umgekehrt bewegbar ist,
**dadurch gekennzeichnet,**
**dass** die Betätigungseinrichtung (100) als ein Betätigungsstift ausgebildet und einstückiger Bestandteil des Verriegelungsteils (92) ist,
**dass** das Verriegelungsteil (92) mittels eines Energiespeichers in seiner verriegelten Position gehalten ist, und
**dass** das jeweilige Verriegelungsteil (92) ein Verriegelungsbolzen (92) ist und der Verriegelungsbolzen (92) eine Ausnehmung (95) aufweist, durch die in der Freigabestellung ein Rastbolzen (82) als Sicherungsteil hindurchgreift, der eine Rastausnehmung (88) aufweist, in die der jeweilige Verriegelungsbolzen (92) in der verriegelnden Stellung eingreift.

2. Adapter nach Anspruch 1, **dadurch gekennzeichnet, dass** das jeweilige Verriegelungsteil respektive der jeweilige Verriegelungsbolzen (92) entgegen der Wirkung des Energiespeichers (98) mittels der Betätigungseinrichtung (100) von seiner verriegelnden Stellung in seine Freigabestellung gelangt.

3. Adapter nach Anspruch 1 oder 2, **dadurch gekennzeichnet, dass** bei aufgesetztem Adapter (14) auf der Werkzeugaufnahme (8) ein Paar von Verriegelungsbolzen (92) in einer Ebene im Adapter (14) aufgenommen einander gegenüberliegend zwischen sich den Rastbolzen (82) aufnehmen.

4. Adapter nach einem der vorstehenden Ansprüche, **dadurch gekennzeichnet, dass** die Ausnehmung des jeweiligen Verriegelungsbolzens (92) und die Rastausnehmung des Rastbolzens (82) aus jeweils umlaufenden Ringnuten (95, 88) gebildet sind, die, ausgehend von ihrem Nutgrund, mit Steuerflächen, insbesondere in Form von Steuerschrägen (94), versehen sind.

5. Adapter nach einem der vorstehenden Ansprüche, **dadurch gekennzeichnet, dass** die beiden entgegengesetzten Verfahrrichtungen des jeweiligen Verriegelungsbolzens (92) quer zur Aufsetzrichtung des Adapters (14) auf die Werkzeugaufnahme (8) verlaufen.

6. Adapter nach einem der vorstehenden Ansprüche, **dadurch gekennzeichnet, dass** der Rastbolzen (82) quer zur Aufnahmefläche der Werkzeugaufnahme (8) und über diese vorstehend stationär an der Werkzeugaufnahme angeordnet ist.

7. Adapter nach einem der vorstehenden Ansprüche, **dadurch gekennzeichnet, dass** die Betätigungseinrichtung einen aus dem Adapter hervorragenden Betätigungsstift (100) aufweist, der den jeweils zuordenbaren Verriegelungsbolzen (92) entgegen der Wirkung des Energiespeichers in Form einer Druckfeder (98) betätigt.

8. Adapter nach Anspruch 7, **dadurch gekennzeichnet, dass** der jeweilige Betätigungsstift (100) in einer Führungseinrichtung (102) längsverfahrbar geführt ist, die stirnseitig an dem Adapter (14) angeordnet ist, und dass vorzugsweise jeder Adapter (14), der an der Werkzeugscheibe (6) festzulegen ist, eine solche Führungseinrichtung (102) aufweist.

9. Adapter nach Anspruch 8, **dadurch gekennzeichnet, dass** die Führungseinrichtung als Handhabe für ein Handhabungssystem, vorzugsweise in der Art eines Prismas (102), ausgebildet ist, das mit seinem einen Eckbereich (101) im festgelegten Zustand des Adapters (14) an der Werkzeugscheibe (6) mit einem vorgebbaren Überstand über diese vorsteht.

10. Adapter nach einem der Ansprüche 1 bis 6, **dadurch gekennzeichnet, dass** an dem Grundkörper (22) eine Führungseinrichtung (102) angeordnet ist, die als Teil der Betätigungseinrichtung von einem Betätigungsstift (100) durchgriffen ist.

11. Adapter nach einem vorstehenden Ansprüche, **dadurch gekennzeichnet, dass** der Energiespeicher in Form einer Druckfeder (98) vorgesehen ist.

12. Adapter nach einem der vorstehenden Ansprüche, **dadurch gekennzeichnet, dass** der Grundkörper (22) als Abdeckplatte (20) für die zuordenbare Werkzeugaufnahme (8) an einer schwenkbaren Werkzeugscheibe (6) ausgeführt ist oder integraler Bestandteil des Werkzeughalters (12, 16, 18) zur Aufnahme eines Bearbeitungswerkzeugs ist oder einen solchen Werkzeughalter (12, 16, 18) trägt, der über eine Durchgriffsöffnung (42) in dem Grundkörper (22) mit einer Antriebs- und Kupplungseinrichtung aufseiten der Werkzeugscheibe (6) verbindbar ist.

13. Adapter nach einem der vorstehenden Ansprüche, **dadurch gekennzeichnet, dass** der Grundkörper (22) rechteckförmig ausgebildet ist und in seinen Eckbereichen (24) Ausnehmungen (11) aufweist, die für den Eingriff mit Passstiften (10) der Werkzeugaufnahme (8) vorgesehen sind.

14. Adapter nach Anspruch 12 oder 13, wenn abhängig von Anspruch 12, **dadurch gekennzeichnet, dass** die Durchgriffsöffnung (42) für das Einsetzen des Werkzeughalters (12, 16, 18) gestuft ausgeführt ist.

## Claims

1. Adapter (14) for a tool holder (12, 16, 18) and a tool mount (8), comprising a plate-shaped main body (22) and a securing device for securing the position of the adapter (14) on the tool mount (8) of a pivotable tool disc (6) of a machine tool,
the securing device comprising an actuating device (100), at least one locking part (92) for securing contact with a securing part (82) of the tool mount (8), and an energy accumulator (98),
the at least one locking part (92) being guided in a longitudinally displaceable manner in the plate-shaped main body (22) and being able to be moved by the actuating device (100) between a locked position and a release position, and vice versa,
**characterised in that**
the actuating device (100) is configured as an actuating pin and is an integral component of the locking part (92),
the locking part (92) is held in its locked position by means of an energy accumulator,
and the respective locking part (92) is a locking pin (92) and the locking pin (92) comprises a recess (95) through which a detent pin (82) engages, as the securing part, in the release position, which detent pin comprises a detent recess (88) into which the respective locking pin (92) engages in the locking position.

2. Adapter according to claim 1, **characterised in that** the respective locking part or the respective locking pin (92) passes from its locking position into its release position, counter to the action of the energy accumulator (98), by means of the actuating device (100).

3. Adapter according to either claim 1 or claim 2, **characterised in that**, when the adapter (14) is placed on the tool mount (8), a pair of locking pins (92), received in one plane in the adapter (14) and opposite one another, receive the detent pin (82) between them.

4. Adapter according to any of the preceding claims, **characterised in that** the recess of the respective locking pin (92) and the detent recess of the detent pin (82) are formed of peripheral annular grooves (95, 88) in each case, which, proceeding from their groove base, are provided with control surfaces, in particular in the form of control chamfers (94).

5. Adapter according to any of the preceding claims, **characterised in that** the two opposing displacement directions of the respective locking pin (92) extend transversely to the placement direction of the adapter (14) onto the tool mount (8).

6. Adapter according to any of the preceding claims, **characterised in that** the detent pin (82) is arranged transversely to the receiving surface of the tool mount (8) and protruding above this in a stationary manner on the tool mount.

7. Adapter according to any of the preceding claims, **characterised in that** the actuating device comprises an actuating pin (100) protruding from the adapter, which actuating pin actuates the respective assignable locking pin (92) counter to the action of the energy accumulator in the form of a compression spring (98).

8. Adapter according to claim 7, **characterised in that** the respective actuating pin (100) is guided in a longitudinally displaceable manner in a guide device (102), which is arranged at the end face on the adapter (14), and **in that** preferably each adapter (14) that is to be fixed on the tool disc (6) comprises a guide device (102) of this kind.

9. Adapter according to claim 8, **characterised in that** the guide device is configured as a handle for a handling system, preferably in the manner of a prism (102), which, when the adapter (14) is in the fixed state on the tool disc (6), protrudes beyond this, with one corner region (101), with a specifiable projection.

10. Adapter according to any of claims 1 to 6, **characterised in that** a guide device (102) is arranged on the main body (22), through which, as part of the actuating device, an actuating pin (100) passes.

11. Adapter according to any of the preceding claims, **characterised in that** the energy accumulator is provided in the form of a compression spring (98).

12. Adapter according to any of the preceding claims, **characterised in that** the main body (22) is configured as a cover plate (20) for the assignable tool mount (8) on a pivotable tool disc (6) or is an integral component of the tool holder (12, 16, 18) for receiving a machining tool or carries such a tool holder (12, 16, 18) which can be connected via a through-opening (42) in the main body (22) to a drive and coupling device on the side of the tool disc (6).

13. Adapter according to any of the preceding claims, **characterised in that** the main body (22) is rectangular and comprises recesses (11) in its corner regions (24), said recesses being provided for engagement with dowel pins (10) of the tool mount (8).

14. Adapter according to either claim 12 or claim 13 if dependent on claim 12, **characterised in that** the through-opening (42) is stepped, for insertion of the tool holder (12, 16, 18).

## Revendications

1. Adaptateur (14) pour
un porte-outil (12, 16, 18) et un raccordement (8) d'outil, comportant une embase (22) en forme de plateau et une installation de sécurisation pour la mise en position sécurisée de l'adaptateur (14) sur le raccordement (8) d'outil d'un disque (6) d'outil pivotant d'une machine-outil,
dans lequel l'installation de sécurisation a un dispositif (100) d'actionnement, au moins une partie (92) de verrouillage pour s'appliquer de manière sécurisée à une partie (82) de sécurisation du raccordement (8) d'outil et un accumulateur (98) d'énergie,
dans lequel la au moins une
partie (92) de verrouillage est guidée à déplacement longitudinal dans l'embase (22) en forme de plateau et peut, au moyen du dispositif (100) d'actionnement, être déplacée entre une position de verrouillage et une position de déverrouillage ainsi qu'inversement,
**caractérisé**
**en ce que** le dispositif (100) d'actionnement est constitué sous la forme d'une tige d'actionnement et est une partie constitutive d'une seule pièce de la partie (92) de verrouillage,
**en ce que** la partie (92) de verrouillage est maintenue dans sa position verrouillée au moyen d'un accumulateur d'énergie, et
**en ce que** la partie (92) de verrouillage respective est un boulon (92) de verrouillage et le boulon (92) de verrouillage a un évidement (95), dans lequel, dans la position déverrouillée, pénètre, comme partie de sécurisation, un boulon (82) d'encliquetage, qui a un évidement (88) d'encliquetage, dans lequel pénètre, dans l'état verrouillée, le boulon (92) de verrouillage respectif.

2. Adaptateur suivant la revendication 1, **caractérisé en ce que** la partie (92) de verrouillage respective arrive, à l'encontre de l'effet de l'accumulateur (98) d'énergie, de sa position de verrouillage à sa position de déverrouillage au moyen du dispositif (100) d'actionnement.

3. Adaptateur suivant la revendication 1 ou 2, **caractérisé en ce que**, lorsque l'adaptateur (14) est posé sur le raccordement (8) d'outil, une paire de boulons (92) de verrouillage reçoivent entre eux le boulon (82) d'encliquetage en étant reçu en opposition dans un plan de l'adaptateur (14).

4. Adaptateur suivant l'une des revendications précédentes, **caractérisé en ce que** l'évidement du boulon (92) de verrouillage respectif et l'évidement de verrouillage du boulon (82) d'encliquetage sont constitués de rainures (95, 88) annulaires respectives faisant le tour, qui, en partant du fond de la rainure, sont munies de surfaces de commande, en particulier sous la forme de biseaux (94) de commande.

5. Adaptateur suivant l'une des revendications précédentes, **caractérisé en ce que** les deux sens de déplacement opposés l'un à l'autre du boulon (92) de verrouillage respectif s'étendent transversalement à la direction de pose de l'adaptateur (14) sur le raccordement (8) d'outil.

6. Adaptateur suivant l'une des revendications précédentes, **caractérisé en ce que** le boulon (82) d'encliquetage est disposé transversalement à la surface du raccordement (8) d'outil et est monté en saillie de celle-ci d'une manière stationnaire sur le raccordement d'outil.

7. Adaptateur suivant l'une des revendications précédentes, **caractérisé en ce que** le dispositif d'actionnement a une broche (100) d'actionnement en saillie de l'adaptateur, qui actionne des boulons (92) de verrouillage pouvant être associés respectivement à l'encontre de l'effet de l'accumulateur d'énergie sous la forme d'un ressort (98) de compression.

8. Adaptateur suivant la revendication 7, **caractérisé en ce que** la broche (100) respective d'actionnement est guidée de manière à pouvoir se déplacer longitudinalement dans un dispositif (102) de guidage, qui est monté du côté frontal sur l'adaptateur (14) et **en ce que**, de préférence, chaque adaptateur (14), qui est à fixer sur le disque (6) d'outil, a un tel dispositif (102) de guidage.

9. Adaptateur suivant la revendication 8, **caractérisé en ce que** le dispositif de guidage est constitué sous la forme d'une manette pour un système de prise, de préférence à la manière d'un prisme (102), qui, par sa partie (101) de coin est, à l'état de l'adaptateur (14) fixé au disque (6) d'outil, est en saillie de celui-ci d'un porte à faux pouvant être donné à l'avance.

10. Adaptateur suivant l'une des revendications 1 à 6, **caractérisé en ce que**, sur l'embase (22), est disposé un dispositif (102) de guidage, qui, comme partie du dispositif d'actionnement, est traversé par une broche (100) d'actionnement.

11. Adaptateur suivant l'une des revendications précédentes, **caractérisé en ce que** l'accumulateur d'énergie est prévu sous la forme d'un ressort (98) de compression.

12. Adaptateur suivant l'une des revendications précédentes, **caractérisé en ce que** l'embase (22) est réalisée sous la forme d'un plateau (20) de recouvrement du raccordement (8) d'outil pouvant être associé à un disque (6) d'outil pivotant ou est une partie constitutive d'une seule pièce du porte-outil (12, 16, 18) pour la réception d'un outil d'usinage ou porte un porte-outil (12, 16, 18) de ce genre, qui peut, par une ouverture (42) de traversée dans l'embase (22), être assemblé à un dispositif d'entraînement et d'accouplement du côté du disque (6) d'outil.

13. Adaptateur suivant l'une des revendications précédentes, **caractérisé en ce que** l'embase (22) est de forme rectangulaire et a, dans ses parties (24) de coin, des évidements (11), qui sont prévus pour l'introduction de goupilles (10) de serrage du raccordement (8) d'outil.

14. Adaptateur suivant la revendication 12 ou 13, lorsqu'elle dépend de la revendication 12, **caractérisé en ce que** l'ouverture (42) de traversée est réalisée en paliers pour l'insertion du porte-outil (12, 16, 18).
